# EUROPÄISCHE PATENTANMELDUNG

(11) **EP 1 645 488 A1**
(43) Veröffentlichungstag der Anmeldung: **12.04.2006**
(21) Anmeldenummer: 05109171.8
(22) Anmeldetag: 04.10.2005
(51) Int. Cl.: B62D 5/04, F16D 41/06, F16D 15/00

(54) **Fahrzeugüberlagerungslenkung mit Zykloidengetriebe**

(30) Priorität: 06.10.2004 DE 102004048521
(71) Anmelder: ZF-Lenksysteme GmbH, 73527 Schwäbisch Gmünd (DE)
(72) Erfinder: Hoersch, Jürgen, 74417, Gschwend (DE); Münster, Martin, 88048 Friedrichshafen (DE)

(57) **Zusammenfassung**

Die Erfindung betrifft eine Fahrzeuglenkvorrichtung (1), insbesondere für ein Kraftfahrzeug, umfassend ein Stellglied (2) mit einem Getriebe (20), mit einem ersten Eingangselement (3), welches mit einem Lenkrad (6) verbindbar ist, mit einem zweiten Eingangselement (4), welches mit einem Antrieb (10) verbindbar ist, und mit einem Ausgangselement (5), welches mit den Fahrzeugrädern (8) verbindbar ist. Erfindungsgemäß wird vorgeschlagen, dass das Getriebe (20) des Stellglieds (2) ein erstes Element (21) mit einer nach radial außen gerichteten modulierten Kontur (22), ein zweites Element (23) mit einer nach radial innen gerichteten modulierten Kontur (24) und ein drittes Element (25) mit in axialer Richtung vorgesehenen Vorsprünge (26) aufweist, welche Vorsprünge (26) in axialer Richtung radial zwischen die modulierten Konturen (22,24) des ersten Elements (21) und des zweiten Elements (23) ragen, wobei zwischen den Vorsprüngen (26) in Umfangsrichtung betrachtet vierte Elemente (27) vorgesehen sind, welche sich radial innen und radial außen an den modulierten Konturen (22,24) abstützen.

## Beschreibung

Die Erfindung betrifft eine Fahrzeuglenkvorrichtung, insbesondere für ein Kraftfahrzeug, nach der im Oberbegriff des Patentanspruches 1 näher bezeichneten Art.

Aus der Praxis sind Lenkvorrichtungen mit einem Überlagerungsgetriebe im Lenkstrang bekannt, mit dem Lenkrad als erstem Eingang, einem Elektroantrieb als zweitem Eingang und einem Lenkritzel als Ausgang des Getriebes, welches vergleichsweise nah am Lenkrad in der Lenksäule angeordnet ist und ein herkömmliches Planeten- oder Schneckengetriebe sein kann. Eine solche Lenkvorrichtung dient dabei zur Darstellung einer so genannten Aktivlenkung.

Die DE 100 00 219 A1 offenbart eine solche Fahrzeuglenkvorrichtung, welche ein Stellglied mit einem zwei Eingangswellen und einer Ausgangswelle aufweisenden Überlagerungsgetriebe umfasst, wobei eine Eingangswelle eine Welle eines Lenkrades ist und die andere Eingangswelle eine Anlenkung eines Elektromotors darstellt. Abtriebsseitig weist das Stellglied eine Anlenkung für eine mit den Fahrzeugrädern beispielsweise über ein Lenkritzel oder ein Lenkgetriebe verbundenen Welle auf. Das Überlagerungsgetriebe des Stellglieds ist ein als zweistufiges Planetengetriebe ausgebildetes Zahnradgetriebe, das dafür sorgt, dass eine Bewegung oder Drehung der Eingangswellen zu einer Bewegung oder Drehung der Ausgangswelle überlagert wird.

Die DE 38 30 654 A1 offenbart ein Stellglied für eine Fahrzeuglenkvorrichtung mit einem einstufigen Planetengetriebe.

Solche Stellglieder haben den Nachteil, dass sie eine sehr hohe Bauteileanzahl aufweisen und ein hoher Aufwand für einen Verdrehspielausgleich erforderlich ist. Damit sind diese bekannten Stellglieder entweder auch unter Großserienbedingungen sehr teuer herzustellen oder es muss in Kauf genommen werden, dass das Verdrehspiel nicht zuverlässig vermieden oder ausgeglichen wird.

Es ist daher Aufgabe der vorliegenden Erfindung, eine Fahrzeuglenkvorrichtung mit einem Stellglied zu schaffen, die gegenüber bekannten Lösungen einfacher und mit einer geringeren Anzahl von Teilen aufgebaut ist sowie einen verbesserten Verdrehspielausgleich aufweist oder gegebenenfalls sogar spielfrei ausgebildet ist.

Erfindungsgemäß wird diese Aufgabe durch eine Fahrzeuglenkvorrichtung gemäß den Merkmalen des Patentanspruches 1 gelöst.

Demgemäß ist bei einer Fahrzeuglenkvorrichtung, welche ein Stellglied umfasst mit einem Getriebe, mit einem ersten Eingangselement, welches mit einem Lenkrad verbindbar ist, mit einem zweiten Eingangselement, welches mit einem Antrieb verbindbar ist, und mit einem Ausgangselement, welches mit den Fahrzeugrädern verbindbar ist, erfindungsgemäß vorgesehen, dass das Getriebe des Stellglieds ein erstes Element mit einer nach radial außen gerichteten modulierten Kontur, ein zweites Element mit einer nach radial innen gerichteten modulierten Kontur und ein drittes Element mit in axialer Richtung vorgesehenen Vorsprünge aufweist, welche Vorsprünge in axialer Richtung radial zwischen die modulierten Konturen des ersten Elements und des zweiten Elements ragen, wobei zwischen den Vorsprüngen in Umfangsrichtung betrachtet vierte Elemente vorgesehen sind, welche sich radial innen und radial außen an den modulierten Konturen abstützen.

Das erfindungsgemäß gestaltete Getriebe stellt damit ein im Lenkstrang eine vom Lenkrad entkoppelte Überlagerungslenkung ermöglichendes Überlagerungsgetriebe mit zwei Eingängen und einem Ausgang in der Art eines Zykloidengetriebes dar, welches ein vorteilhafterweise spielfreies Getriebe mit einer in weiten Bereichen wählbaren Übersetzung und mit einem konstruktiv einfachen Aufbau ist.

Bei einer vorteilhaften Ausführung der Erfindung ist das erste Element des Getriebes, welche eine modulierte Innenkontur aufweist, mit dem zweiten Eingangselement des Stellglieds, d. h. mit dem Antrieb, verbunden, wobei das zweite oder dritte Element des Getriebes mit dem ersten Eingangselement des Stellglieds, d. h. mit dem Lenkrad, verbunden ist. Dabei kann zusätzlich zu einem von einem Fahrer eingestellten Lenkradwinkel ein von Lenkbewegungen des Fahrers unabhängiger Drehwinkel an dem mit dem Antrieb verbundenen ersten Element des Getriebes überlagert werden.

Zur Realisierung einer Überlagerungslenkung kann somit das erste Element des Getriebes mit dem zweiten Eingangselement des Stellglieds verbunden sein, wobei das zweite Element des Getriebes mit dem ersten Eingangselement des Stellglieds und das dritte Element des Getriebes mit dem Ausgangselement des Stellglieds verbunden ist oder wobei das zweite Element des Getriebes mit dem Ausgangselement des Stellglieds und das dritte Element des Getriebes mit dem ersten Eingangselement des Stellglieds verbunden ist.

Besonders vorteilhaft ist es, wenn die modulierte Kontur des ersten Elements und die modulierte Kontur des zweiten Elements eine unterschiedliche Modulation oder Periodizität aufweisen. Dadurch wird bei Verdrehung der ersten, zweiten und dritten Elemente eine Untersetzung erreicht. Die Modulation ergibt sich als Abweichung der Teile von einer kreisförmigen Bahn.

Erfindungsgemäß ist es besonders zweckmäßig, wenn die modulierte Kontur des ersten und/oder des zweiten Elements eine einfach oder mehrfach elliptisch ausgeformte Kontur ist. Die elliptische Kontur des ein Hohlrad bildenden zweiten Elements mit der nach radial innen weisenden Kontur weist eine Anzahl von Ausformungen auf, wovon sich vorteilhafterweise die Anzahl der vierten Elemente unterscheidet, so dass bei stehendem zweiten Element pro Umdrehung des dritten Elements die vierten Elemente von Ausformung zu Ausformung wandern und eine Untersetzung realisieren. Die Anzahl der radiale Einbuchtungen darstellenden Ausformungen an der Innenkontur des zweiten Elements und die Anzahl der vorzugsweise nockenartigen Ausformungen an der Außenkontur des ersten Elements bestimmen dabei auch die Untersetzung des Getriebes.

Es ist zweckmäßig, wenn die vierten Elemente als Roll- oder Wälzkörper ausgebildet sind, welche derart gelagert sind, dass sie bei einer Relativverdrehung zwischen dem ersten Element, dem zweiten Element und/oder dem dritten Element des Getriebes radial verschieblich sind. So wird auf einfache Weise die Untersetzung des Getriebes bewirkt, da die Roll- oder Wälzkörper sich an der radial äußeren Kontur des ersten Elements und der radial inneren Kontur des zweiten Elements abstützen und bei Verdrehung an diesen im Wesentlichen abrollen oder abwälzen.

Besonders zweckmäßig ist es, wenn die vierten Elemente zylindrische Wälzkörper sind. Gemäß eines weiteren erfindungsgemäßen Gedankens können die vierten Elemente auch als kugelförmige Rollkörper ausgebildet sein.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen.

Es zeigt:
- Fig. 1: eine vereinfachte schematische Darstellung einer erfindungsgemäßen Fahrzeuglenkvorrichtung in einem Bockschaltbild;
- Fig. 2: eine vereinfachte Explosionsdarstellung eines Getriebes der in Fig. 1 gezeigten Fahrzeuglenkvorrichtung in Alleinstellung;
- Fig. 3: eine Prinzipskizze einer ersten Ausführung einer Anordnung des Getriebes nach Fig. 2 in einer erfindungsgemäßen Fahrzeuglenkvorrichtung; und
- Fig. 4: eine Prinzipskizze einer zweiten Ausführung einer Anordnung des Getriebes nach Fig. 2 in einer erfindungsgemäßen Fahrzeuglenkvorrichtung.

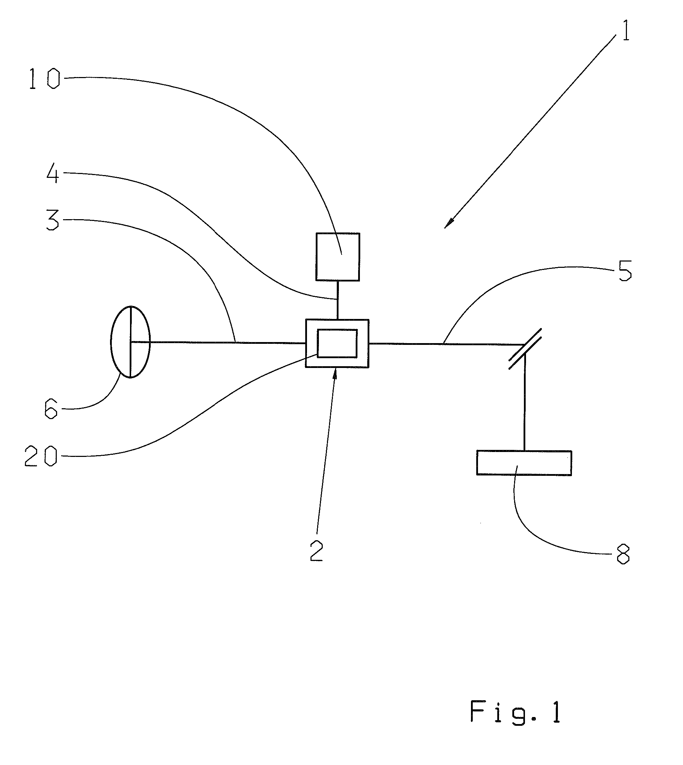

Die Fig. 1 zeigt schematisch vereinfacht eine Fahrzeuglenkvorrichtung 1 eines Kraftfahrzeuges mit einem Stellglied 2, welches ein Getriebe 20, ein erstes Eingangselement 3, ein zweites Eingangselement 4 und ein Ausgangselement 5 aufweist. Das erste Eingangselement 3 des Stellglieds 2 stellt vorliegend eine Lenksäule dar, welche mit einem Lenkrad 6 des Kraftfahrzeuges verbunden ist. Das zweite Eingangselement 4 des Stellglieds 2 ist über eine Getriebeeinheit 7 mit einem Antriebselement 10 verbunden, und das Ausgangselement 5 des Stellglieds 2 ist mit über die Fahrzeuglenkvorrichtung 1 lenkbaren Fahrzeugrädern 8 verbunden.

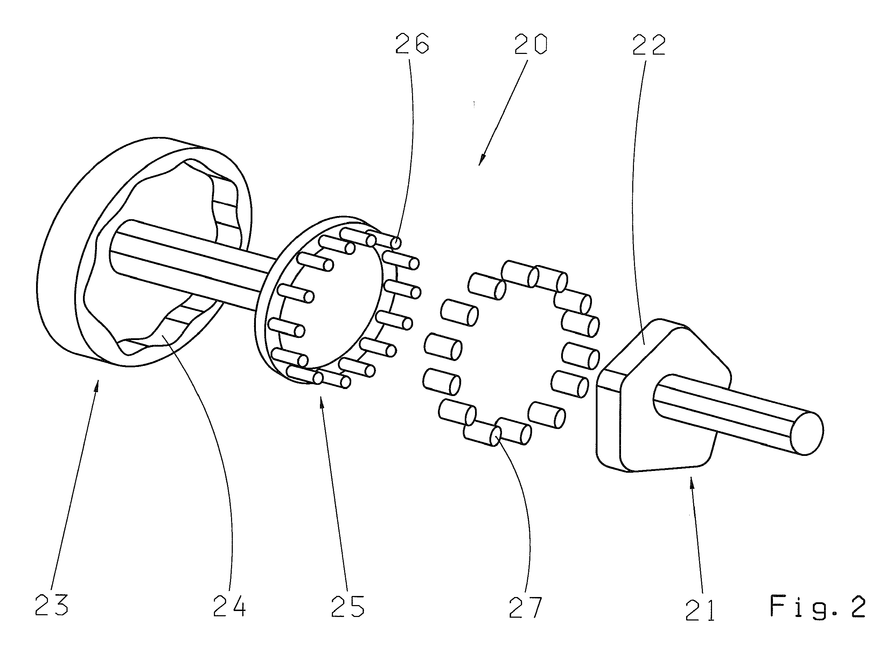

Die Fig. 2 zeigt detaillierter den Aufbau des Getriebes 20 des Stellglieds 2, wobei ersichtlich ist, dass das Getriebe 20 mit einem ersten Element 21 mit einer nach radial außen gerichteten, mit nockenartigen Ausformungen modulierten Kontur 22, einem zweiten Element 23 mit einer nach radial innen gerichteten, mit Ausbuchtungen modulierten Kontur 24 und einem dritten Element 25 mit in axialer Richtung vorstehenden, bolzenartigen Vorsprüngen 26, welche in axialer Richtung radial zwischen die modulierten Konturen 22, 24 des ersten und des zweiten Elements 21, 23 ragen, ausgebildet ist.

Zwischen den bolzenartigen Vorsprüngen 26 sind in Umfangsrichtung betrachtet vierte Elemente 27 vorgesehen sind, welche sich radial innen und radial außen an den modulierten Konturen 22, 24 abstützen. Die vierten Elemente 27 sind beider gezeigten Ausführung als zylindrische Wälzkörper ausgebildet, jedoch ist es alternativ auch denkbar die vierten Elemente z. B. als kugelförmige Rollkörper auszubilden.

Bei einer Relativverdrehung des zweiten Elements 23 des Stellglieds 2 bezüglich des dritten Elements 25 und/oder des ersten Elements 21 des Stellglieds 2 verdrehen und verlagern sich die Wälzkörper 27 in radialer Richtung zwischen den bolzenartigen Vorsprüngen 26 des dritten Elements 25.

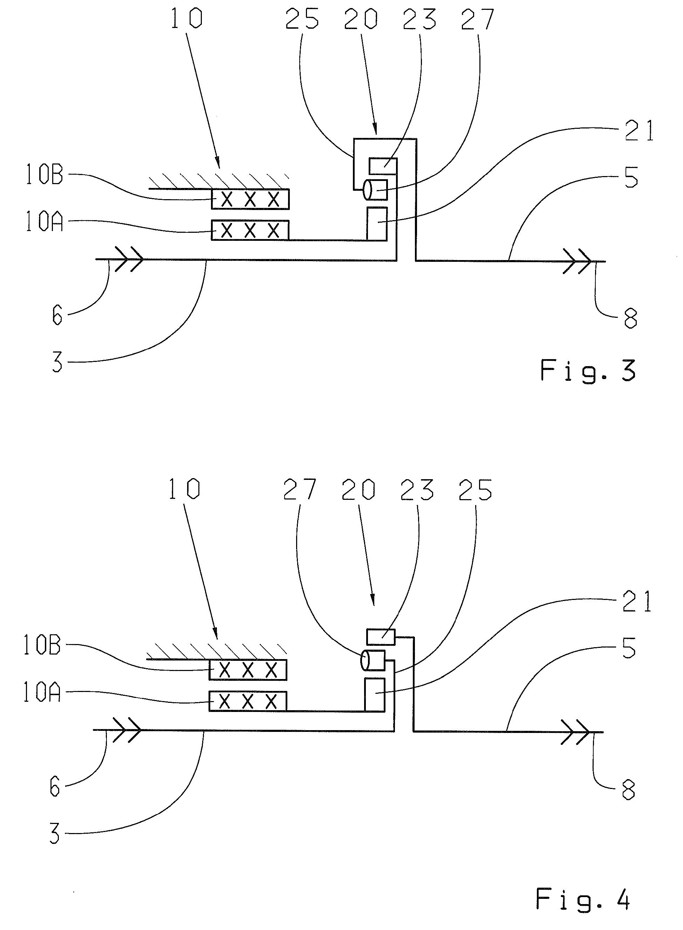

Die Fig. 3 zeigt eine erste Anordnung des Getriebes 20 in dem Stellglied 2 der Fahrzeuglenkvorrichtung 1.

Eingangsseitig ist das Getriebe 20 über das erste Element 21, welches mit der radial außen hier fünf Nocken aufweisenden Kontur 22 als ein elliptisches Kurvenrad ausgebildet ist, mit dem Antrieb 10, welcher vorliegend ein Elektromotor ist, verbunden. Dabei ist ein Rotor 10A des Elektromotors 10 koaxial zu einer Zentralachse des Getriebes 20 angeordnet, und ein Stator 10B ist raumfest radial und koaxial um Rotor 10A angeordnet.

Das zweite Element 23 des Getriebes 20 mit der radial nach innen weisenden, vorliegend neun wellenartige Ausbuchtungen aufweisenden Kontur ist mit der Lenksäule 3 und somit mit dem Lenkrad 6 verbunden. Der zu den Rädern 8 bzw. einem diesen vorgeschalteten Lenkgetrieberitzel führende Abtrieb 5 ist mit dem die bolzenartigen Vorsprünge 26 aufweisenden dritten Element 25 des Getriebes 20 verbunden.

Bei dieser Anordnung und dem beschriebenen Aufbau des Getriebes 20 wird bei entsprechender Aktivierung eine Drehbewegung des ersten Elements 21, welche durch den Antrieb 10 antreibbar ist, und eine Drehbewegung des zweiten Elements 23 überlagert, so dass eine entsprechende Bewegung des dritten Elements 25 als Abtrieb resultiert.

Da das Lenkrad 6 mit dem zweiten Element 23 verbunden ist, führen Lenkbewegungen ohne Eingriff durch den Antrieb 10 zu einer Verdrehung der gesamten Getriebebaugruppe, und der Lenkwinkel bzw. Stellwinkel der Lenksäule 3 wird direkt an den Abtrieb 5 und somit an das Lenkgetrieberitzel übertragen.

Dieser passiven Lenkung kann ein weiterer Relativverdrehwinkel des die Wälzkörper 27 haltenden dritten Elements 25 des Getriebes 20 durch entsprechende Ansteuerung des Elektromotors 10 überlagert werden, indem das erste Element 21 mit der Form eines elliptischen Kurvenrads mittels des Elektromotors 10 relativ zu dem gesamten Getriebe 20 verdreht wird. Auf diese Weise ist es erfindungsgemäß möglich, unabhängig einer fahrerseitigen Betätigung des Lenkrads 6 eine im wesentlichen spielfreie Beeinflussung des Getriebeausgangswinkels und damit eines Zahnstangenwegs und letztlich eines Radlenkwinkels zu erreichen.

Die Fig. 4 zeigt eine zweite, alternative Anordnung des Getriebes 20 in dem Stellglied 2, wobei eingangsseitig mit dem ersten Element 21 mit der radial nach außen weisenden Kontur 22 der Antrieb bzw. Elektromotor 10 verbunden ist, bei dem der Rotor 10A koaxial zur Zentralachse des Getriebes 20 angeordnet und von dem Stator 10B radial umgeben ist.

Das zweite Element 23 mit der radial nach innen weisenden Kontur 24 ist mit dem eine Abtriebswelle darstellenden Abtrieb 5 verbunden, welcher über ein Lenkgetrieberitzel zu den zu lenkenden Fahrzeugrädern 8 führt. Das Lenkrad 6 und die Lenksäule 3 sind ist mit dem dritten Element 25 mit den bolzenartigen, im Kreis an dem dritten Element 25 angeordneten Vorsprüngen 26 verbunden. Auch bei einem derartigen Aufbau des Stellglieds 2 ist ein vom Lenkrad 6 entkoppelter Radlenkwinkel einstellbar.

Bei den Ausführungen gemäß Fig. 3 und Fig. 4 ist der Elektromotor 10 jeweils als ein Hohlwellenelektromotor ausgebildet, welcher koaxial zu dem eine Lenksäule bildenden ersten Eingangselement 3 des Stellglieds 2 angeordnet ist. Dadurch wird erreicht, dass sich das dynamische Statormoment an einem Lenkgetriebegehäuse abstützt und nicht an der Lenksäule 3 selbst.

Erfindungsgemäß können aber auch alternativ andere Motoren verwendet werden, wie beispielsweise ein im Inneren der Lenksäule liegenden Vollwellenmotor.

Auch kann ein Elektromotor zur Minimierung des Bauraums des Getriebes in axialer Richtung achsparallel zu der Lenksäule angeordnet sein und mittels Übertragungsmitteln, wie Stirnradgetriebe, Reibradgetriebe oder Zugmittelgetriebe mit dem ersten Element des Getriebes verbunden sein. Dabei kann der Motor als Vollwellenmotor ausgebildet sein.

### Bezugszeichen

- 1: Fahrzeuglenkvorrichtung
- 2: Stellglied
- 3: erstes Eingangselement des Stellglieds, Lenksäule
- 4: zweites Eingangselement des Stellglieds
- 5: Ausgangselement des Stellglieds
- 6: Lenkrad
- 8: Rad
- 10: Antrieb, Elektromotor
- 10A: Rotor
- 10B: Stator
- 20: Getriebe
- 21: erstes Element des Getriebes
- 22: modulierte nach radial außen gerichtete Kontur
- 23: zweites Element des Getriebes
- 24: modulierte nach radial innen gerichtete Kontur
- 25: drittes Element des Getriebes
- 26: Vorsprünge
- 27: vierte Elemente des Getriebes

## Patentansprüche

1. Fahrzeuglenkvorrichtung (1), insbesondere für ein Kraftfahrzeug, umfassend ein Stellglied (2) mit einem Getriebe (20), mit einem ersten Eingangselement (3), welches mit einem Lenkrad (6) verbindbar ist, mit einem zweiten Eingangselement (4), welches mit einem Antrieb (10) verbindbar ist, und mit einem Ausgangselement (5), welches mit den Fahrzeugrädern (8) verbindbar ist, **dadurch gekennzeichnet, dass** das Getriebe (20) des Stellglieds (2) ein erstes Element (21) mit einer nach radial außen gerichteten modulierten Kontur (22), ein zweites Element (23) mit einer nach radial innen gerichteten modulierten Kontur (24) und ein drittes Element (25) mit in axialer Richtung vorgesehenen Vorsprünge (26) aufweist, welche Vorsprünge (26) in axialer Richtung radial zwischen die modulierten Konturen (22, 24) des ersten Elements (21) und des zweiten Elements (23) ragen, wobei zwischen den Vorsprüngen (26) in Umfangsrichtung betrachtet vierte Elemente (27) vorgesehen sind, welche sich radial innen und radial außen an den modulierten Konturen (22, 24) abstützen.

2. Fahrzeuglenkvorrichtung nach Anspruch 1, **dadurch gekennzeichnet, dass** das erste Element (21) des Getriebes (20) mit dem zweiten Eingangselement (4) des Stellglieds (2), das zweite Element (23) des Getriebes (20) mit dem ersten Eingangselement (3) des Stellglieds (2) und das dritte Element (25) des Getriebes (20) mit dem Ausgangselement (5) des Stellglieds (2) verbunden ist.

3. Fahrzeuglenkvorrichtung nach Anspruch 1, **dadurch gekennzeichnet, dass** das erste Element (21) des Getriebes (20) mit dem zweiten Eingangselement (4) des Stellglieds (2), das zweite Element (23) des Getriebes (20) mit dem Ausgangselement (5) des Stellglieds (2) und das dritte Element (25) des Getriebes (20) mit dem ersten Eingangselement (3) des Stellglieds (2) verbunden ist.

4. Fahrzeuglenkvorrichtung nach einem der Ansprüche 1 bis 3, **dadurch gekennzeichnet, dass** die modulierte Kontur (22) des ersten Elements (21) und die modulierte Kontur (24) des zweiten Elements (23) eine unterschiedliche Modulation oder Periodizität aufweisen.

5. Fahrzeuglenkvorrichtung nach einem der Ansprüche 1 bis 4, **dadurch gekennzeichnet, dass** die modulierte Kontur (22, 24) des ersten Elements (21) und/oder des zweiten Elements (23) eine einfach oder mehrfach elliptisch ausgeformte Kontur ist.

6. Fahrzeuglenkvorrichtung nach einem der Ansprüche 1 bis 5, **dadurch gekennzeichnet, dass** die vierten Elemente als Roll- oder Wälzkörper (27) ausgebildet sind, welche bei einer Relativverdrehung zwischen dem ersten Element (21), dem zweiten Element (23) und/oder dem dritten Element (25) des Getriebes (20) radial verschieblich gelagert sind.

7. Fahrzeuglenkvorrichtung nach Anspruch 6, **dadurch gekennzeichnet, dass** die vierten Elemente als zylindrische Wälzkörper (27) ausgebildet sind.

8. Fahrzeuglenkvorrichtung nach Anspruch 6, **dadurch gekennzeichnet, dass** die vierten Elemente als kugelförmige Rollkörper ausgebildet sind.

9. Fahrzeuglenkvorrichtung nach einem der Ansprüche 1 bis 6, **dadurch gekennzeichnet, dass** der Antrieb (10) als ein Elektromotor ausgebildet ist.

10. Fahrzeuglenkvorrichtung nach einem der Ansprüche 1 bis 9, **dadurch gekennzeichnet , dass** der Antrieb (10) ein Hohlwellenelektromotor ist.

11. Fahrzeuglenkvorrichtung nach Anspruch 10, **dadurch gekennzeichnet, dass** der Hohlwellenelektromotor (10) koaxial zu dem eine Lenksäule bildenden ersten Eingangselement (3) des Stellglieds (2) angeordnet ist.

12. Fahrzeuglenkvorrichtung nach einem der Ansprüche 1 bis 9, **dadurch gekennzeichnet, dass** der Antrieb ein Vollwellenelektromotor ist.

13. Fahrzeuglenkvorrichtung nach einem der vorhergehenden Ansprüche, **dadurch gekennzeichnet, dass** der Antrieb mittels einer als Zugmittelgetriebe, Stirnradgetriebe oder Reibradgetriebe ausgebildeten Getriebeeinheit mit dem zweiten Eingangselement des Getriebes verbindbar ist.
